# EUROPÄISCHE PATENTANMELDUNG

(11) **EP 1 876 751 A2**
(43) Veröffentlichungstag der Anmeldung: **09.01.2008**
(21) Anmeldenummer: 07012761.8
(22) Anmeldetag: 29.06.2007
(51) Int. Cl.: H04L 9/08

(54) **Transponder, RFID-System und Verfahren für RFID-System mit Schlüsselverwaltung**

(30) Priorität: 05.07.2006 DE 102006032130
(71) Anmelder: ATMEL Germany GmbH, 74072 Heilbronn (DE)
(72) Erfinder: Friedrich, Ulrich, Dipl.-Ing., 74248 Ellhofen (DE)
(74) Vertreter: Patentanwälte Ruff, Wilhelm, Beier, Dauster & Partner

(57) **Zusammenfassung**

Die Erfindung betrifft einen Transponder (2), insbesondere einen passiven und/oder rückstreubasierten Transponder, für ein RFID-System (1), wobei auf dem Transponder (2) mindestens eine erste Information (SPW) in einem ersten Speicherbereich (20) abgelegt ist, der nur durch einen transponderinternen Lesezugriff im Klartext zugänglich ist, eine zweite Information (ASIG) in einem zweiten Speicherbereich (22) ablegbar ist, der über eine Luftschnittstelle für einen Lesezugriff im Klartext zugänglich ist, und die zweite Information (ASIG) aus der ersten Information unter Verwendung eines asymmetrischen Verschlüsselungsverfahrens generiert ist. Die Erfindung betrifft weiter ein RFID-System für einen drahtlosen Datenaustausch umfassend einen Transponder und eine Basisstation und ein Verfahren zur Anforderung eines Schreib- und/oder Lesezugriffs auf einen Transponder, insbesondere einen passiven und/oder rückstreubasierten Transponder.

## Beschreibung

Die Erfindung betrifft einen Transponder für ein RFID-System, ein RFID-System für einen drahtlosen Datenaustausch umfassend einen Transponder und eine Basisstation und ein Verfahren zur Anforderung eines Schreib- und/oder Lesezugriffs auf einen Transponder, insbesondere einen passiven und/oder rückstreubasierten Transponder.

Ein Radio-Frequency-Identification (RFID)-System besteht üblicherweise aus einer Basisstation bzw. einem Lesegerät oder einer Leseeinheit und einer Vielzahl von Transpondern oder Remote-Sensoren, die sich gleichzeitig im Ansprechbereich der Basisstation befinden. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die so genannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage des Unterträgers geändert wird.

In dem Normungsvorschlag ISO/IEC_CD 18000-6C vom 07.01.2005 ist ein Zugriffssteuerungsverfahren für Transponder beschrieben (siehe insbesondere ISO/IEC_CD 18000-6C Kapitel 6.3.2, Seiten 27 - 60). Der Transponder wird hierbei zunächst in einem Auswahl- bzw. Arbitrierungsverfahren aus einer Menge von Transpondern ausgewählt. Bei dem beschriebenen Auswahlverfahren handelt es sich um ein stochastisches Verfahren in Form eines slotbasierten ALOHA-Verfahrens. Derartige Auswahlverfahren sind ausführlich beispielsweise in dem Lehrbuch Klaus Finkenzeller, RFID-Handbuch, 3. Aufl., HANSER, 2002, beschrieben (siehe insbesondere Kapitel 7.2, Vielfachzugriffsverfahren - Antikollision, Seiten 203 bis 216).

Ein Zugriffsteuerungsverfahren ist beispielsweise ebenfalls in der nicht vorveröffentlichten DE 10 2006 002516 A1 beschrieben.

Für einen Zugriff sendet üblicherweise eine Leseeinheit einen sogenannten Anfrage-Befehl ("Query-command"). Der Transponder antwortet auf diese Anfrage mit der Übermittlung einer Zufallszahl. Durch Senden einer Bestätigung ("Acknowledge") wird der Transponder vereinzelt. Der vereinzelte Transponder überträgt Protokollsteuerbits (PC) und eine Kennung in Form eines so genannten elektronischen Produktcodes (EPC) an die Leseeinheit. Die Protokollsteuerbits beinhalten Informationen bezüglich einer physikalischen Schicht der Übertragungsstrecke. Die Kennung bzw. der elektronische Produktcode EPC bildet unter anderem eine durch den Transponder gekennzeichnete Ware ab. Die Zuordnung vom EPC zu der gekennzeichneten Ware ist standardisiert, so dass aus der Kenntnis der EPC auf die Ware geschlossen werden kann.

Nach der Übertragung der PC und des EPC durch den Transponder ist üblicherweise ein Lese- und/oder ein Schreibzugriff auf Speicherbereiche des Transponders durch die Basisstation möglich, es sei denn, dass bestimmte Bereiche für einen Lese- und/oder Schreibzugriff durch ein Passwort geschützt, verriegelt oder gelockt sind. Weiterhin kann ein Lese- und/oder ein Schreibzugriff auf einen weiteren Speicherbereich des Transponders für einen direkten Zugriff über eine Luftschnittstelle und/oder einen Pin durch die Basisstation dauerhaft verriegelt oder **ge**lockt sein. In diesem sogenannten privaten Bereich sind beispielsweise Passwörter abgelegt, wobei der Speicherbereich beispielsweise durch eine interne Logik des Transponders für einen Passwortvergleich zugänglich ist.

Für einen Schreibzugriff auf einen durch ein Passwort geschützten Bereich ist ein Passwort oder sind mehrere Passwörter durch die anfragende Basisstation an den Transponder zu übertragen. Üblicherweise wird hierfür ein symmetrisches Verfahren eingesetzt, d.h. bei der Basisstation und dem Transponder sind die gleichen Passwörter abgelegt. Dadurch wird ein einfaches Schutzsystem geschaffen. Ein Nachteil symmetrisch verteilter Passwörter oder Schlüssel ist jedoch der beträchtliche Aufwand für ein Passwort- oder Schlüsselmanagement. Für einen Zugriff auf einen Transponder muss das zugehörige Passwort an alle beteiligten Basisstationen oder Leseeinheiten verteilt werden. Insbesondere bei Datenmanagementsystemen, welche flexibel an veränderte Infrastrukturen und/oder Anwendungen anpassbar sein sollen, sogenannten offenen Datenmanagementsystemen, wäre hierfür ein erheblicher Aufwand für eine Schlüsselverteilung notwendig.

Es sind weiter sogenannte asymmetrische Verfahren bekannt, wobei Daten durch einen sogenannten öffentlichen Schlüssel verschlüsselt sind, welcher einer unbegrenzten Anzahl an Beteiligten zugänglich ist, wohingegen nur ein Beteiligter oder eine begrenzte Anzahl an Beteiligten ein Geheimnis für eine Entschlüsselung kennt. Asymmetrische Sicherungsverfahren sind beispielsweise für eine Authentifizierung und/oder eine Authentisierung (authentication) im Bereich des Geldtransfers üblich. Asymmetrische Verfahren sind in der Regel jedoch rechenintensiv und benötigen einen batteriebetriebenen Transponder oder eine andere batteriebetriebene Einheit.

Der Erfindung liegt die Aufgabe zugrunde, ein RFID-System für einen drahtlosen Datenaustausch, einen Transponder für ein RFID-System und ein Verfahren zur Zugriffssteuerung auf einen Transponder zur Verfügung zu stellen, die ein einfaches Management einer Zugriffsteuerung ermöglichen.

Diese Aufgabe wird gelöst durch die Gegenstände mit den Merkmalen der Ansprüche 1, 6 und 8. Weitere vorteilhafte Ausgestaltungen sind in den Unteransprüchen beschrieben.

Auf einem erfindungsgemäßen Transponder für ein RFID-System, insbesondere einem passiven und/oder rückstreubasierten Transponder, ist mindestens eine erste Information in einem ersten Speicherbereich abgelegt, der nur durch einen transponderinternen Lesezugriff im Klartext zugänglich ist, und eine zweite Information in einem zweiten Speicherbereich ablegbar, der über eine Luftschnittstelle für einen Lesezugriff im Klartext zugänglich ist, wobei die zweite Information aus der ersten Information unter Verwendung eines öffentlichen Schlüssels eines asymmetrischen Verschlüsselungsverfahrens generiert ist. Die zweite Information ist durch eine beliebige Basisstation auslesbar. Eine berechtigte Basisstation kennt einen korrespondierenden privaten Schlüssel und kann mit dem Schlüssel die erste Information aus der zweiten Information extrahieren. In einer Ausführungsform umfasst der Transponder hierfür Mittel, durch welche die zweite Information aus der ersten Information generierbar ist. Durch Veränderungen von Parametern, insbesondere von öffentlich propagierten Parametern, des asymmetrischen Verschlüsselungsverfahrens ist dabei eine transponderinterne Anpassung der zweiten Information möglich. In einer anderen Ausführungsform ist die zweite Information durch externe Mittel generierbar und anschließend auf den Transponder aufspielbar. Dadurch ist ein einfacher Aufbau des Transponders möglich.

In einer Ausgestaltung der Erfindung ist die erste Information ein symmetrisches Passwort, das transponderintern durch eine interne Logik des Transponders für einen Passwortvergleich zugänglich ist. Durch die extrahierte erste Information kann eine berechtigte Basisstation somit einen Lese- und/oder Schreibzugriff auf den Transponder und/oder auf bestimmte Datenbereiche des Transponders erfolgreich anfordern.

In einer weiteren Ausgestaltung der Erfindung ist auf dem Transponder eine dritte Information abgelegt, welche eine Kodierung zum Generieren der zweiten Information kennzeichnet. Die Art der Kodierung ist beispielsweise durch ein Verfahren, eine Schlüssellänge und ähnliche Informationen gekennzeichnet.

In Weiterführung der Erfindung sind die zweite und/oder die dritte Information durch eine Sicherungsmaßnahme vor einem Lesezugriff über die Luftschnittstelle geschützt. Als Sicherungsmaßnahme sind beispielsweise Auflagen, wie Übertragung einer richtigen Transponder-Identifikation (Tag-ID) und/oder ein erfolgreich durchgeführtes Auswahl- und/oder Arbitrierungsverfahren denkbar. Weitere Sicherungsmaßnahmen, wie ein Schutz durch ein Passwort oder ähnliches sind erfindungsgemäß nicht notwendig.

In einer Ausgestaltung der Erfindung ist das asymmetrische Verschlüsselungsverfahren ein Elliptische-Kurven-Kryptosystem-Verfahren. Dabei ist die erste Information durch einen geheimen Schlüssel kodierbar, welcher ein durch Übertragung eines jeweiligen öffentlichen Schlüssels ausgetauschtes Geheimnis ist. Die öffentlichen Schlüssel stehen dabei allen Beteiligten zur Verfügung. Doch nur durch die asymmetrisch verteilten privaten Schlüssel ist der geheime Schlüssel generierbar und damit die erste Information aus der zweiten Information extrahierbar. Anstelle eines Elliptische-Kurven-Kryptosystem-Verfahrens ist in einer anderen Ausführungsform ein Diffie-Hellmann-Verfahren oder eine Kombination der Verfahren eingesetzt.

Die Aufgabe wird weiter gelöst durch ein RFID-System für einen drahtlosen Datenaustausch umfassend mindestens einen Transponder und mindestens eine Basisstation, wobei auf dem Transponder mindestens eine erste Information in einem ersten Speicherbereich abgelegt ist, der nur durch einen transponderinternen Lesezugriff im Klartext zugänglich ist, eine zweite Information in einem zweiten Speicherbereich ablegbar ist, der über eine Luftschnittstelle für einen Lesezugriff im Klartext zugänglich ist, und die zweite Information aus der ersten Information unter Verwendung eines asymmetrischen Verschlüsselungsverfahrens generiert ist. Die erste Information ist durch die Basisstation aus der zweiten Information und einer zu dem asymmetrischen Verschlüsselungsverfahren des Transponders korrespondierenden Schlüsselinformation berechenbar und ein Schreib- und/oder Lesezugriff auf mindestens einen ersten Datenbereich des Transponder für die Basisstation nach Empfang der ersten Information freigegeben. Dabei erhält eine berechtigte Basisstation des RFID-Systems einen Schreib- und/oder Lesezugriff auf den ersten Datenbereichen eines beliebigen Transponders des RFID-Systems, ohne dass der Basisstation die erste Information für die Freigabe des ersten Datenbereichs für alle im System befindlichen Transponder bekannt ist. Eine Schlüsselinformation ist gemäß einer Ausführungsform für eine Gruppe an Transpondern einheitlich. In einer anderen Ausführungsform sind verschiedenen Transpondern verschiedene Schlüsselinformationen zugeordnet. Durch Weitergabe der Schlüsselinformation können zu jedem Zeitpunkt Basisstationen in das System eingeschlossen werden, auch ohne Kenntnis der erste(n) Information(en) der Transponder. Daneben können durch Änderungen der asymmetrischen Schlüsseldaten Basisstationen aus dem RFID-System ausgeschlossen werden, ohne dass hierfür alle auf den Transpondern gespeicherten ersten Informationen geändert werden müssen.

In einer Ausgestaltung weist mindestens ein Transponder mindestens einen zweiten Datenbereich auf, wobei ein Schreib- und/oder Lesezugriff auf den zweiten Datenbereich des Transponders ohne Übertragung der ersten Information freigegeben ist. Das RFID-System ist beispielsweise für Produkte ab einer Herstellung bis zu einem Verkauf an Endverbraucher einsetzbar. Dabei können verschiedene Informationen über die Produkte durch beliebige Basisstationen jederzeit offen liegen. Andere Informationen sind aus Datenschutz- und/oder Sicherheitsgründen nur für eine bestimmte Gruppe an Berechtigten zugänglich. Diese Informationen sind in einer Ausführungsform in einem Datenbereich abgelegt, welcher durch die erste Information geschützt ist. Ändert sich die Gruppe an Berechtigten, so kann durch Änderung in der asymmetrischen Verschlüsselung die entsprechende Person aus dem Datenaustausch ausgeschlossen werden, ohne das hierfür die erste Information auf dem Transponder zu ändern ist. Der zweite Datenbereich kann dabei gleich dem ersten Speicherbereich sein oder einem anderen Speicherbereich des Transponders zugeordnet sein.

Die Aufgabe wird weiter gelöst durch ein Verfahren zur Anforderung eines Schreib- und/oder Lesezugriffs auf einen Transponder eines RFID-Systems, wobei auf dem Transponder mindestens eine erste Information in einem ersten Speicherbereich abgelegt wird, der nur durch einen transponderinternen Lesezugriff im Klartext zugänglich ist, und der Schreib- und/oder Lesezugriff auf mindestens einen ersten Datenbereich des Transponder durch die erste Information geschützt wird. Auf dem Transponder wird weiter eine zweite Information in einem zweiten Speicherbereich abgelegt, der über eine Luftschnittstelle für einen Lesezugriff im Klartext zugänglich ist, wobei die zweite Information aus der ersten Information unter Verwendung eines asymmetrischen Verschlüsselungsverfahrens generiert wird. Erfindungsgemäß wird die zweite Information aus dem Transponder durch eine Basisstation ausgelesen, die erste Information durch die Basisstation aus der zweiten Information und einer zu dem asymmetrischen Verschlüsselungsverfahren korrespondierenden Schlüsselinformation berechnet und durch die Basisstation ein Schreib- und/oder Lesezugriff auf den Transponder unter Übertragen der ersten Information angefordert. Die erste Information ist nur durch eine Basisstation, welche die korrespondierende Schlüsselinformation besitzt, aus der verschlüsselten zweiten Information extrahierbar. Dabei ist es nicht notwendig, dass an der Basisstation die erste Information gespeichert wird und/oder diese Information auf sonstige Art und Weise der Basisstation zur Verfügung gestellt wird.

In einer Weiterbildung der Erfindung wird die Schlüsselinformation durch die Basisstation zumindest teilweise aus einem Basisstation-Speicherbereich ermittelt. Dabei können in dem Basisstation-Speicherbereich verschiedene Schlüsselinformationen, welche verschiedenen Transpondern zugeordnet sind, abgelegt sein. Die Schlüsselinformationen werden dem Speicherbereich in einer Ausführungsform in Abhängigkeit einer Tag-ID entnommen.

In Ausgestaltung der Erfindung wird als asymmetrisches Verschlüsselungsverfahren ein Elliptische-Kurven-Kryptosystem-Verfahren (EKK-Verfahren) eingesetzt. Das EKK-Verfahren ermöglicht bei geringen Schlüssellängen eine sichere Verschlüsselung. In einer anderen Ausführungsform ist ein Diffie-Hellmann-Verschlüsselungsverfahren eingesetzt. In wieder anderen Ausführungsformen können die Verschlüsselungsverfahren miteinander kombiniert werden.

In einer weiteren Ausgestaltung der Erfindung wird die Schlüsselinformation durch die Basisstation unter Nutzung der dritten Information ermittelt. Die dritte Information kennzeichnet eine Kodierung zum Generieren der zweiten Information. Die Art der Kodierung wird beispielsweise durch ein Verfahren, eine Schlüssellänge und ähnliche Informationen gekennzeichnet. Die Schlüsselinformation kann beispielsweise den öffentlichen Schlüssel des Transponders für die asymmetrische Verschlüsselung im EKK-Verfahren umfassen.

In Weiterbildung der Erfindung wird die dritte Information aus dem Transponder ausgelesen. Die dritte Information steht der Basisstation in einem öffentlich zugänglichen Speicherbereich zur Verfügung.

In einer anderen Ausgestaltung der Erfindung wird die dritte Information aus einer Vereinbarung ermittelt. Die dritte Information, welche beispielsweise eine Art der Verknüpfung der ersten Information zur Erzeugung der zweiten Information festlegt, kann durch einen Standard festgeschrieben sein. Dies ermöglicht es, auf einfache Weise weitere Basisstationen und/oder Transponder in ein RFID-System aufzunehmen.

In einer Ausgestaltung der Erfindung wird die erste Information an den Transponder entsprechend einer Festlegung in einem Protokoll übertragen. Dadurch wird verhindert, dass die erste Information bei Übertragung von der Basisstation an den Transponder durch eine unberechtigte Basisstation abgehört wird.

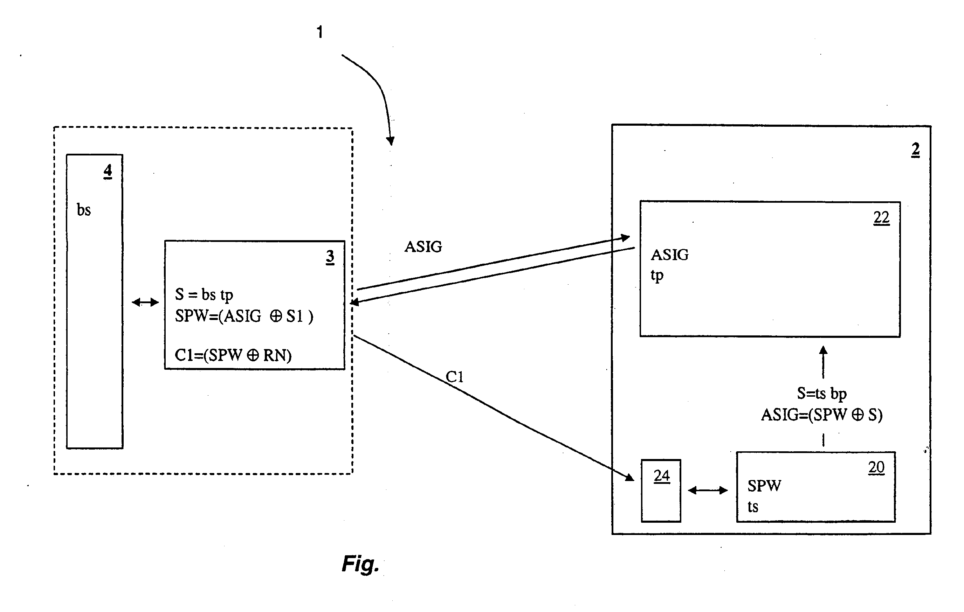

Weitere Vorteile der Erfindung ergeben sich aus der nachfolgenden Beschreibung eines Ausführungsbeispiels der Erfindung, das in der Zeichnung dargestellt ist. Die einzige Zeichnung zeigt:
- Fig.: eine schematische Darstellung eines erfindungsgemäßen RFID-Systems.

Die Figur zeigt schematisch ein erfindungsgemäßes RFID-System 1, umfassend einen Transponder 2 und eine Basisstation 3. Der Basisstation ist ein Speicher 4 zugeordnet.

Der Transponder 2 weist mindestens einen ersten Speicherbereich 20 und einen zweiten Speicherbereich 22 auf. Der erste Speicherbereich 20 ist ein privater Speicherbereich, der nur durch einen transponderinternen Lesezugriff durch eine Logik 24 im Klartext zugänglich ist. Der erste Speicherbereich 20 ist von außen nicht auslesbar. In dem ersten Speicherbereich 20 ist eine erste Information abgelegt, wobei es sich bei der ersten Information in der dargestellten Ausführungsform um ein symmetrisches Passwort SPW handelt. Der Transponder 2 weist beispielsweise nicht dargestellte Datenbereiche auf, wobei sicherheitsrelevante Zugriffe wie ein Lese- und/oder Schreibzugriff oder ein Sperrzugriff auf die Datenbereiche nur durch Übertragung des symmetrischen Passworts SPW möglich ist. Das symmetrische Passwort ist beispielsweise ein sogenanntes "Kill-password" oder ein "Access-Password" gemäß dem bereits genannten Normungsvorschlag ISO/IEC_CD 18000-6C.

Der zweite Speicherbereich 22 ist über eine Luftschnittstelle für einen Lesezugriff im Klartext zugänglich. In einer Ausführungsform ist der Lesezugriff dabei nur unter Auflagen, wie beispielsweise einem erfolgreichen Abschluss eines Arbitrierungsverfahrens, zugänglich. In dem zweiten Speicherbereich 22 ist eine zweite Information abgelegt, wobei es sich dabei um eine asymmetrische Information ASIG handelt, welche aus der ersten Information unter Verwendung eines asymmetrischen Verschlüsselungsverfahrens generiert ist.

In der dargestellten Ausführungsform erfolgt eine Verschlüsselung über das Elliptische-Kurven-Kryptosystem-Verfahren (EKK-Verfahren). Dabei einigen sich Basisstationen und Transponder des RFID-Systems öffentlich auf eine gültige elliptische Kurve und einen Punkt P auf dieser Kurve.

Die Basisstation 3 beschafft sich geheim eine Zufallszahl bs, welche beispielsweise in einem Speicher 4 abgelegt ist. Analog beschafft sich der Transponder 2 geheim eine Zufallszahl ts, welche nur dem Transponder bekannt ist. In der dargestellten Ausführungsform ist ts in dem Speicherbereich 20 abgelegt. In einer anderen Ausführungsform wird ts für jede Übertragung neu generiert. Bei der Basisstation 3 ist ein öffentlicher Schlüssel bp=bs•P berechenbar. Dieser Schlüssel wird dem Transponder 2 zur Verfügung gestellt. Analog bestimmt der Transponder 2 einen öffentlichen Schlüssel tp=ts•P, welcher in der dargestellten Ausführungsform in dem für einen Lesezugriff zugänglichen Speicherbereich 22 ablegt ist. Bei dem Elliptische-Kurven-Kryptosystem gilt S=bs•tp = ts•bp. Damit ist ein Schlüssel S gegeben, welcher sowohl für den Transponder 2 als auch für die Basisstation 3 einfach unter Verwendung der öffentlichen Schlüssel tp und bp berechenbar ist.

Die Basisstation 3 liest die zweite Information, d.h. die asymmetrische Information ASIG, aus dem zweiten Speicherbereich 22 des Transponders 2 aus. Unter Verwendung des privaten Schlüssels bs kann der Schlüssel S und damit das symmetrische Passwort SPW durch die Basisstation 3 aus der asymmetrischen Information ASIG extrahiert werden.

Zur Anforderung eines Lese-und/oder Schreibzugriffs auf den Transponder 2 überträgt die Basisstation 3 das extrahierte symmetrische Passwort SPW. Die Übertragung erfolgt in der dargestellten Ausführungsform gemäß einem bekannten Protokoll, wobei das symmetrische Passwort SPW durch eine Zufallszahl RN verschlüsselt wird, die in einer Ausführungsform zuvor durch den Transponder an die Basisstation übertragen wurde.

Durch das erfindungsgemäße Verfahren wird zwar auf dem Transponder ein zusätzlicher Speicherbereich zum Ablegen der zweiten Information, d.h. der asymmetrischen Information, benötigt, das Verfahren erlaubt jedoch eine deutlich einfachere Verwaltung von Passwörtern als herkömmliche Verfahren.

In der dargestellten Ausführungsform steht die Information tp zum Entschlüsseln des symmetrischen Passworts für die Basisstation 3 im zugänglichen Speicherbereich 22 des Transponders. In anderen Ausführungsformen steht diese Information über andere Quellen, beispielsweise über das Internet, zur Verfügung.

Der private Schlüssel bs kann der Basisstation 3 ebenfalls über das Internet oder eine andere Informationsquelle zur Verfügung gestellt werden.

In einer Ausführungsform wird ein erfindungsgemäßes RFID-System umfassend eine Vielzahl an Basisstationen 3 und Transponder 2 für ein Skipasssystem eingesetzt. Ein Transponder 2 ist dabei auf einem Skipass angebracht. In einem ersten Datenbereich des Transponders 2 sind beispielsweise Informationen über die Gültigkeitsdauer und/oder den Gültigkeitsbereich des Skipasses abgelegt. Diese Informationen sind dabei für einen Lesezugriff durch eine Vielzahl an Basisstationen, beispielsweise an Liftstationen, zugänglich. Die Information kann auch beliebigen anderen Basisstationen, welche nicht Teil des SkipassSystems sind, im Regelfall ohne Bedenken bezüglich der Sicherheit und/oder des Datenschutzes zur Verfügung gestellt werden. Durch die drahtlose Übertragung ist dabei eine besonders komfortable Handhabung des Skipasses gegeben. Ein Schreibzugriff auf den Speicherbereich ist den den einfachen Liftstationen zugeordneten Basisstationen oder Basisstationen, die nicht Teil des Skipasssystems sind, jedoch verwehrt. An speziellen Ticketverkaufsstellen kann beispielsweise durch Zukauf weiterer Geltungstage und/oder Geltungsbereiche die Gültigkeit des Skipasses verändert werden. Basisstationen, welche den Ticketverkaufsstellen zugeordnet sind, benötigen daher einen Schreibzugriff auf den Transponder. Aufgrund der Vielzahl an Lifttickets und der Vielzahl an damit verbundenen Transpondern entsteht jedoch ein erheblicher Aufwand, wenn allen Ticketverkaufsstellen alle möglichen symmetrischen Passwörter der Transponder zur Verfügung gestellt werden sollen. Wird allen Transpondern ein identisches symmetrisches Passwort zugewiesen, so entsteht eine erhebliche Sicherheitslücke, da durch einen erfolgreichen Einbruch in einen Transponder das gesamte System dem Angreifer zur Verfügung steht.

Erfindungsgemäße ist daher auf jedem Transponder 2 ein einzigartiges symmetrisches Passwort SPW abgelegt. Aus dem symmetrischen Passwort SPW wird erfindungsgemäß eine asymmetrische Information ASIG generiert, welche jeder Basisstation, zur Verfügung steht. Eine berechtigte Basisstation 3, beispielsweise bei der Ticketverkaufsstelle, verfügt über eine korrespondierende Schlüsselinformation, durch welche sie aus der asymmetrischen Information ASIG das einzigartige symmetrische Passwort SPW des Transponders 2 extrahiert. Durch dieses Passwort erhält die Basisstation 3 des Ticketverkaufs einen Schreibzugriff auf bestimmte Datenbereiche des Transponders 2, so dass eine Gültigkeit des Lifttickets veränderbar ist.

Es ist offensichtlich, dass auf dem für einen Skipass genutzten Transponder 2 weitere Informationen, wie beispielsweise Daten über einen Gesundheitszustand eines Liftkarteninhabers ablegbar sind, welche beispielsweise im Falle eines Unfalls durch die Rettungskräfte schnell auslesbar sind und diesen für lebenserhaltende Maßnahmen sofort zur Verfügung gestellt werden können. Diese privaten Informationen des Liftkartenhalters sollen jedoch für Basisstationen, welche nicht den Rettungskräften zugeordnet sind, aus Datenschutzgründen zu keinem Zeitpunkt zur Verfügung gestellt sein. Die Informationen können auf dem Transponder durch ein weiteres symmetrisches Passwort geschützt sein, wobei die Rettungskräfte das symmetrische Passwort durch die ihnen zur Verfügung gestellte Schlüsselinformation im Bedarfsfall schnell extrahieren können.

In dem dargestellten Szenario für ein Skipasssystem handelt es sich nur um ein mögliches Anwendungsbeispiel, wobei die hohe Flexibilität, das heißt, die einfache Erweiterbarkeit des Systems durch weitere Transponder und/oder Basisstationen deutlich wird. Andere Szenarien, wobei die erfindungsgemäßen Transponder 2 Waren und/oder Personen zugeordnet sind, sind denkbar.

## Patentansprüche

1. Transponder für ein RFID-System (1), insbesondere passiver und/oder rückstreubasierter Transponder, wobei auf dem Transponder (2) mindestens eine erste Information in einem ersten Speicherbereich (20) abgelegt ist, der nur durch einen transponderinternen Lesezugriff im Klartext zugänglich ist, und eine zweite Information in einem zweiten Speicherbereich (22) ablegbar ist, der über eine Luftschnittstelle für einen Lesezugriff im Klartext zugänglich ist,
**dadurch gekennzeichnet, dass**
die zweite Information aus der ersten Information unter Verwendung eines öffentlichen Schlüssels eines asymmetrischen Verschlüsselungsverfahrens generiert ist.

2. Transponder nach Anspruch 1, **dadurch gekennzeichnet, dass** die erste Information ein symmetrisches Passwort (SPW) ist, das transponderintern durch eine interne Logik (24) des Transponders (2) für einen Passwortvergleich zugänglich ist.

3. Transponder nach Anspruch 1 oder 2, **dadurch gekennzeichnet, dass** auf dem Transponder (2) eine dritte Information abgelegt ist, welche eine Kodierung zum Generieren der zweiten Information kennzeichnet.

4. Transponder nach Anspruch 1, 2 oder 3, **dadurch gekennzeichnet, dass** die zweite und/oder die dritte Information durch eine Sicherungsmaßnahme vor einem Lesezugriff über die Luftschnittstelle geschützt sind.

5. Transponder nach einem der Ansprüche 1 bis 4, **dadurch gekennzeichnet, dass** das asymmetrische Verschlüsselungsverfahren ein Elliptische-Kurven-Kryptosystem-Verfahren ist.

6. RFID-System für einen drahtlosen Datenaustausch umfassend mindestens einen Transponder (2) nach einem der Ansprüche 1 bis 5 und mindestens eine Basisstation (3),
**dadurch gekennzeichnet, dass**
die erste Information durch die Basisstation (3) aus der zweiten Information und einer zu dem asymmetrischen Verschlüsselungsverfahren des Transponders (2) korrespondierenden Schlüsselinformation berechenbar ist und
ein Schreib- und/oder Lesezugriff auf mindestens einen ersten Datenbereich des Transponders (2) für die Basisstation (3) nach Empfang der ersten Information freigegeben ist.

7. RFID-System nach Anspruch 6, **dadurch gekennzeichnet, dass** der Transponder (2) mindestens einen zweiten Datenbereich aufweist, wobei ein Schreib- und/oder Lesezugriff auf den zweiten Datenbereich des Transponders (2) ohne Übertragung der ersten Information freigegeben ist.

8. Verfahren zur Anforderung eines Schreib- und/oder Lesezugriffs auf einen Transponder (2) für ein RFID-System nach einem der Ansprüche 1 bis 5, wobei der Schreib- und/oder Lesezugriff auf den Transponder (2) durch die erste Information geschützt ist,
**dadurch gekennzeichnet, dass**
die zweite Information aus dem Transponder (2) durch eine Basisstation ausgelesen wird,
die erste Information durch die Basisstation (3) aus der zweiten Information und einer zu dem asymmetrischen Verschlüsselungsverfahren korrespondierenden Schlüsselinformation berechnet wird und
durch die Basisstation (3) ein Schreib- und/oder Lesezugriff auf den Transponder (2) unter Übertragen der ersten Information angefordert wird.

9. Verfahren nach Anspruch 8, **dadurch gekennzeichnet, dass** die Schlüsselinformation (S) durch die Basisstation (3) zumindest teilweise aus einem Basisstation-Speicherbereich (4) ermittelt wird.

10. Verfahren nach Anspruch 8 oder 9, **dadurch gekennzeichnet, dass** als asymmetrisches Verschlüsselungsverfahren ein Elliptische-Kurven-Kryptosystem-Verfahren eingesetzt wird.

11. Verfahren nach Anspruch 8, 9 oder 10, **dadurch gekennzeichnet, dass** die Schlüsselinformation (S) durch die Basisstation unter Nutzung einer dritten Information (tp) ermittelt wird.

12. Verfahren nach Anspruch 11, **dadurch gekennzeichnet, dass** die dritte Information (tp) aus dem Transponder (2) ausgelesen wird.

13. Verfahren nach Anspruch 11 oder 12, **dadurch gekennzeichnet, dass** die dritte Information aus einer Vereinbarung ermittelt wird.

14. Verfahren nach einem der Ansprüche 8 bis 13, **dadurch gekennzeichnet, dass** die erste Information an den Transponder (2) entsprechend einer Festlegung in einem Protokoll übertragen wird.
